# EUROPÄISCHE PATENTSCHRIFT

(11) **EP 2 151 908 B1**
(45) Veröffentlichungstag und Bekanntmachung des Hinweises auf die Patenterteilung: **06.10.2010**
(21) Anmeldenummer: 08013949.6
(22) Anmeldetag: 04.08.2008
(51) Int. Cl.: H02K 5/22, H02K 11/00

(54) **Dynamoelektrische Maschine mit einem mehrteiligen Steckergehäuse**
Dynamo-electric machine with a multi-piece connector housing
Machine dynamoélectrique dotée d'un boîtier de connexion en plusieurs parties

(43) Veröffentlichungstag der Anmeldung: 10.02.2010
(73) Patentinhaber: SIEMENS AKTIENGESELLSCHAFT, 80333 München (DE)
(72) Erfinder: Eckert, Rainer, 97616 Bad Neustadt/Herschfeld (DE); Grosse-Benne, Dirk, 58706 Menden (DE)

(56) Entgegenhaltungen:
- DE-U1-202006 017 131

## Beschreibung

Die Erfindung betrifft eine dynamoelektrische Maschine mit einem mehrteiligen Steckergehäuse das ein Drehgelenk zwischen den Steckergehäuseteilen aufweist.

Elektrische Betriebsmittel, beispielsweise dynamoelektrische Maschinen werden über elektrische Anschlussleitungen durch Steckverbinder mit elektrischer Energie versorgt. Darüber hinaus dient diese Steckverbindung auch der Übertragung von Gebersignalen und Sensorsignalen als auch der Funktionserdung.

Die Funktionserdung ist für die störungsfreie Funktion der elektrischen Betriebsmittel von erheblicher Bedeutung. Dabei unterscheidet man allgemein zwischen zwei Erdungsarten. Die Schutzerdung und die Funktionserdung. Bei der Schutzerdung, die dem Schutz von Menschen und Tieren vor einem elektrischen Schlag dient und nur im Störfall einen Schutz darstellen soll, stellt die Funktionserdung einen funktionellen Teil des regulären Betriebs der elektrischen Betriebsmittel dar und ist deshalb für einen störungsfreien Betrieb der jeweiligen elektrischen Betriebsmittel wesentlich.

Elektrische Betriebsmittel, insbesondere bei der industriellen Anlagentechnik weisen meist ein metallenes Gehäuse auf, das aus diesem Grund und aufgrund der einschlägigen DIN-Normen mit einer Schutzerdung zu versehen ist. Des Weiteren wird über die Erdungsverbindung des metallenen Gehäuses eine Funktionserdung geschaffen, die dazu dient, die elektrischen Betriebsmittel EMV-gerecht zu installieren. (EMV = Elektromagnetische Verträglichkeit). Da die Schutzerde ihrem Zweck entsprechend nicht auf die Funktion eines Gerätes, sondern in erster Linie dem Personenschutz dient, reicht eine alleinige Schutzerdung oft nicht aus, um neben dem Personenschutz die elektromagnetische Verträglichkeit der elektrischen Betriebsmittel zu gewährleisten; insofern ist es meistens erforderlich, eine zusätzliche Funktionserde anzuschließen. Dabei ist letztendlich auf eine konsequente Trennung von Funktionserde und Schutzerde zu achten. Die Schutzerde darf bis auf wenige Ausnahmen nicht an die Funktionserde angeschlossen werden.

Die Funktionserde ist in der Regel nicht dafür ausgelegt, Schutzleiterfunktionen zu übernehmen, somit ist bei einem Anschluss des Schutzleiters an den Funktionserdungsanschluss die elektrische Sicherheit des Personals nicht gewährleistet. Eine leitende Verbindung zwischen Schutzerde und Funktionserde wird üblicherweise erst in der Nähe der eigentlichen Erde geschaffen. Im Hinblick auf den Personenschutz hat bei der Massegebung der Personenschutz Vorrang. Erst in zweiter Linie ist auf die Funktionserdung eines elektrischen Betriebsmittels zu achten.

Die Funktionserdung hat im Wesentlichen folgende Aufgaben:
- Ableiten von Störströmen und somit eine Verbesserung der EMV,
- Festlegen eines erforderlichen gemeinsamen Bezugspotentials, um den Betrieb elektrischer Betriebsmittel zu gewährleisten.

Schutzleiter müssen entsprechend den DIN-VDE-Vorschriften (beispielsweise DIN-VDE 0100 Teil 540 Erdung, Schutzleiter, Potentialausgleichsleiter) dimensioniert werden, ein korrekt dimensionierter Schutzleiter eignet sich nur bedingt zur Ableitung von elektromagnetischen Störungen. Kombinierte Schutz- und Funktionserdungsleiter müssen neben den vorschriftsmäßigen Querschnitt auch eine große Oberfläche aufweisen.

D.h., die Oberfläche, insbesondere metallische Oberflächen der elektrischen Betriebsmittel, müssen in jedem Fall über eine Schutzleiterverbindung mit Erde verbunden sein, um einen ausreichenden Personenschutz zu gewährleisten. Bei einteiligem Steckergehäuse ist ein Erdungspin des Steckers leitend mit dem Steckergehäuse verbunden und das Steckergehäuse wiederum leitend mit dem elektrischen Betriebsmittel. Eine separate Erdungsleitung zwischen dem elektrischen Betriebsmittel und dem Stecker ist somit nicht notwendig.

Bei mehrteiligen Steckergehäusen jedoch, deren Teile beispielsweise durch ein Drehgelenk verbunden sind, besteht die Gefahr, dass eine leitende Verbindung zwischen diesen Teilen nicht immer ausreichend durch das Gehäuse bzw. über das Drehgelenk des Steckers gewährleistet ist. Dies ist insbesondere bei einem Bruch des Drehgelenks der Fall.

Um auf jeden Fall eine Erdung zu erhalten, wird eine separate Erdungsleitung vom Erdungspin des Steckers zu einem leitenden Teil des Motorgehäuses geführt, um immer einen ausreichenden Personenschutz gewährleisten zu können.

Diese Erdungsleitung ist zwingend notwendig, wenn z.B. aufgrund einer mechanischen Belastung das Steckergehäuse im Drehgelenk bricht, und somit eine leitende Verbindung zur Oberfläche der elektrischen Betriebsmittel unterbrochen ist. Der Motor wäre dabei weiterhin über die Anschlussleitungen betriebsfähig aber ein Personenschutz wäre im Störfall, z.B. einem Erdschluss der Wicklung nicht mehr gegeben.

Nachteilig bei einer separaten Erdungsleitung zwischen Erdungspin des Steckers und dem elektrischen Betriebsmittel sind die zusätzlichen Kosten für einen derartigen Hochtemperaturlitzenleitung, einem zusätzlichen Kabelschuh, als auch die Montage der Leitung an Motor und Stecker, ebenso wie eine Bohrung und ein Gewinde beispielsweise im Motorlagerschild zur Befestigung des Kabelschuhs. Insbesondere bei kompakt aufgebauten Motoren geringer Achshöhe ist eine derartige Montage besonders aufwändig.

Aus der DE 20 2006 017 131 U1 ist ein Scheinwerfer zur Beleuchtung bekannt, mit einem elektrischen Anschluss zur Verbindung des Scheinwerfers mit einer Versorgungsleitung für die elektrische Versorgung des Scheinwerfers, wobei der elektrische Anschluss drehbar am Scheinwerfer angeordnet und zur Verbindung des Scheinwerfers mit der Versorgungsleitung in seiner Ausrichtung anpassbar ist.

Ausgehend davon liegt der Erfindung die Aufgabe zugrunde, eine dynamoelektrische Maschine mit einem mehrteiligen Steckergehäuse zu schaffen, das einen ausreichenden Personenschutz gewährleistet und insbesondere bei dynamoelektrischen Maschinen kleiner Achshöhe einen Montagevorteil bietet ohne den Personenschutz zu vernachlässigen.

Die Lösung der gestellten Aufgabe gelingt durch eine dynamoelektrische Maschine mit einem Stator in dem ein Wicklungssystem positioniert ist, mit zumindest einem mehrteiligen Steckergehäuse mit einem Drehgelenk zwischen Steckergehäuseteilen, mit zumindest einem Steckverbinder mit wenigstens zwei Steckelementen, wobei zumindest ein Steckergehäuseteil aus elektrisch leitfähigem Material ist, wobei dieses elektrisch leitfähige Steckergehäuseteil mit zumindest einem Steckelement durch eine flexible elektrische Leitung durch das Drehgelenk verbunden ist, wobei das der dynamoelektrischen Maschine zugewandte elektrisch leitfähige Steckergehäuseteil mit der elektrisch leitenden Oberfläche eines Motorgehäuses der dynamoelektrischen Maschine elektrisch leitend verbunden ist.

Als Drehgelenk wird dabei ein Gelenk verstanden, das eine Bewegung zweier benachbarter Steckergehäuseteile nicht nur in einer Ebene zulässt sondern eine dreidimensionale Freiheitsgrade gemäß einem Kugel- bzw. Hüftgelenk eines menschlichen Körpers zulässt.

Die beiden zueinander beweglichen Steckergehäuseteile, die eine Bewegung aufgrund eines Drehgelenks ausüben, werden nunmehr mit einer flexiblen Leitung elektrisch verbunden. Dabei ist das der dynamoelektrischen Maschine zugewandte Steckergehäuseteil direkt mit dem Gehäuse dieser dynamoelektrischen Maschine verbunden. Das an dem Gehäuse angebrachte Steckergehäuseteil ist ortsfest und nicht drehbar angebracht. Das oder die weiteren Steckergehäuseteile dieses Steckers sind über ein bzw. mehrere Drehgelenke miteinander verbunden, so dass eine nahezu beliebige Ausrichtung des Steckers an der Maschine durchführbar ist.

Bei dieser dynamoelektrischen Maschine ist dabei nun diese Erdungsleitung nicht mechanisch mehr belastet als die weiteren Motoranschlussleitungen, die von dem Leitungspin im Steckergehäuse durch die Steckergehäuseteile zur Wicklung der dynamoelektrischen Maschine in das Gehäuse der dynamoelektrischen Maschine führen.

Vorteilhafterweise ist diese Erdungsleitung wendelförmig ausgeführt, so dass auch bei einem möglichen Bruch insbesondere des Drehgelenks zur mechanischen Verbindung der beiden Steckergehäuseteile, ein Abreißen der Erdungsleitung verhindert wird, so dass zuerst ein Abreißen der Motoranschlussleitungen eintreten würde, bevor der Personenschutz nicht mehr gewährleistet wäre. Der dem Motorgehäuse zugewandte und das an diesem befestigte Steckergehäuseteil weist ebenfalls einen Erdungspin auf, so dass die Erdungsleitung von diesem Erdungspin zum Erdungspin des Steckverbinders führt.

Eine Schutzleitererdung des Motorgehäuses wird nun dadurch erreicht, dass das dem Motor zugewandte Steckergehäuseteil, das vorteilhafterweise einen Flansch ausbildet und elektrisch leitfähig ist, mit der metallischen Oberfläche der dynamoelektrischen Maschine elektrisch leitfähig kontaktiert wird. Diese Kontaktflächen zwischen dem Steckergehäuseteil und der Oberfläche der dynamoelektrischen Maschine müssen fett- und schmutzfrei sein. Des Weiteren sollte auch die Oberfläche der Maschine zumindest an diesem Kontaktierungspunkt nicht lackiert sein und keine Oxydschicht aufweisen, um den Übergangswiderstand zu reduzieren.

Vorteilhafterweise kann zur Vermeidung von nachträglich entstehenden Oxydschichten an diesen Kontaktstellen eine geschweißte Verbindung Schraubverbindungen vorzuziehen sein.

Die Erfindung sowie weitere vorteilhafte Ausgestaltungen der Erfindung sind dem in der Zeichnung prinzipiell dargestellten Ausführungsbeispiel näher erläutert. Darin zeigen:
- FIG 1: einen prinzipiell dargestellten erfindungsgemäßen Ste- cker,
- FIG 2: Anwendung eines Steckers bei einer dynamoelektrischen Maschine.

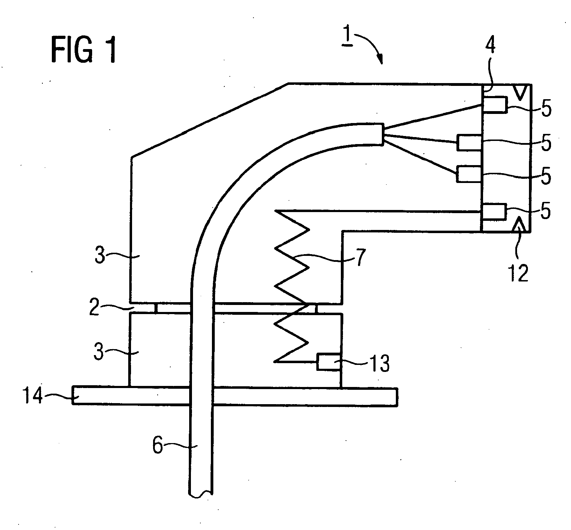

FIG 1 zeigt ein Steckergehäuse 1, das gewinkelt ausgebildet ist und ein Drehgelenk 2 aufweist. Das Steckergehäuse 1 ist zweiteilig ausgebildet, wobei sich die Erfindung nicht nur auf zweiteilige beschränkt sondern auf drei, vier oder mehrteilige Steckergehäuse 1 anwendbar ist.

Die beiden Steckergehäuseteile 3 sind zueinander beweglich und weisen jeweils einen Hohlraum auf, in dem die Anschlussleitungen der elektrischen Betriebsmittel, insbesondere die Stromversorgungsleitungen einer dynamoelektrischen Maschine 15, als auch eine Erdungsleitung 7 und/oder nicht näher dargestellte Sensorleitungen verlaufen.

Dadurch, dass das Drehgelenk 2 ebenfalls hohl ausgeführt ist, sind sämtliche dieser Leitungen geschützt verlegt.

Sowohl die Anschlussleitungen 6, als auch die Erdungsleitung 7 sind auf einen Steckverbinder 4 geführt. Steckverbinder 4 dienen dem Trennen bzw. Verbinden von Leitungen. Diese Leitungen führen beispielsweise einen Strom oder Signale oder dienen der Erdung.

Bei elektrischen Steckverbindern 4 unterscheidet man den männlichen Teil einer Steckverbindung (mit nach außen weisenden Kontaktstiften) vom weiblichen Teil (mit nach innen weisenden Kontaktöffnungen). Der männliche Teil wiederum ist ein Stecker, wenn er am Ende eines Kabels angebracht, oder ein Einbaustecker, wenn er fest in ein Gehäuse eingebaut ist. Der weibliche Teil ist eine Kupplung, wenn er am Ende eines Kabels angebracht oder eine Buchse, wenn er fest in ein Gehäuse eingebaut ist. Es gibt auch Steckverbinder 4 mit Steckelementen beiderlei Geschlechtes.

Dies ist beispielhaft am Steckverbinder 4 des vorliegenden Steckergehäuses 1 dargestellt, wo unterschiedliche Steckelemente 5 beispielhaft angeordnet sind. Eine Kontaktierung eines Kabels an diesen Steckverbinder 4 weist dementsprechend die dazu korrespondierenden Steckelemente auf. Um ein unwillkürliches Lösen eines Kabels mit einem Stecker 11 vom Steckverbinder 4 zu vermeiden, sind prinzipiell dargestellte Arretierungen 12 am Steckergehäuse 1, insbesondere an diesem Steckergehäuseteil 3 angebracht. Diese dienen dazu, die elektrischen Verbindungsstifte mechanisch zu entlasten und die für eine ordnungsgemäße Kontaktierung erforderliche Haltekraft zu übernehmen.

Des Weiteren können derartige Verbindungen auch durch Snap-Verbindungen hergestellt werden, die bei Bedarf manuell vergleichsweise leicht lösbar sind und damit ein einfaches Abziehen des Steckers gestatten.

Für äußere Verbindungen dieses Steckers 11 mit dem Steckverbinder 4 über das Steckergehäuse 1 eignen sich auch Schraubverbindungen oder Überwurfmuttern, die aber nicht näher dargestellt sind.

Das Gehäuseteil des oben liegenden Steckergehäuseteils 3 mit dem Steckverbinder 4 ist axial über die Steckelemente 5 gezogen, um auch dort einen Berührungsschutz gewährleisten zu können. Diese teilweise Kapselung bewirkt ebenfalls einen gewissen Staub- und Korrosionsschutz der Steckelemente 5.

Erfindungsgemäß weist nunmehr das Steckergehäuse 1 eine Erdungsverbindung über eine Erdungsleitung 7 seiner beiden Steckergehäuseteile 3 auf, die von einer Erdungskontaktstelle 13 zu einem Steckelement 5 des Steckverbinders 4 führt. Bei Kontaktierung des Steckverbinders 4 mit einem externen Stecker 11 ist dabei eine Erdung beispielsweise über eine Anlagenerde gewährleistet und damit der Personenschutz gegeben.

Der untere Teil des anderen Steckergehäuseteils 3 weist vorteilhafterweise einen Flansch 14 auf, mit dem eine Kontaktierung zu elektrischen Betriebsmittel, insbesondere zum Gehäuse einer dynamoelektrischen Maschine 15 geschaffen wird.

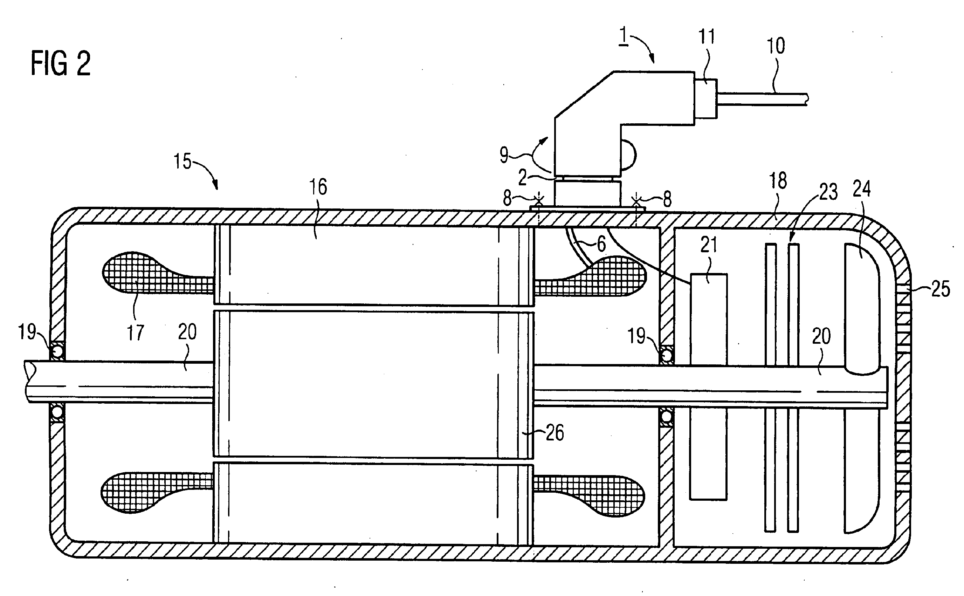

FIG 2 zeigt in einer prinzipiellen Darstellung ein Steckergehäuse 1, das beispielsweise an einer dynamoelektrischen Maschine 15 angebracht ist. Bei einer derartigen dynamoelektrischen Maschine 15 dient das Steckergehäuse 1 der Zuführung der elektrischen Leitungen und der Funktions- und/oder Schutzerdung der dynamoelektrischen Maschine 15. Des Weiteren können ebenfalls über bzw. im Steckergehäuse 1 elektrische Signalleitungen bzw. Gebersignale geführt werden.

Eine derartige dynamoelektrische Maschine 15 ist aber nicht auf lediglich ein Steckergehäuse 1 beschränkt, es können sich ebenfalls zwei oder drei derartige Steckergehäuse 1 an einer dynamoelektrischen Maschine 15 befinden. Die weiteren Steckergehäuse sind dabei nicht notwendigerweise ebenso mehrteilig ausgeführt, d.h. es sind dynamoelektrische Maschinen 15 vorstellbar, die entweder ein oder mehrere mehrteilige, insbesondere zweiteilige Steckergehäuse 1 aufweisen, ebenso wie dynamoelektrische Maschinen mit einem mehrteiligen Steckergehäuse 1 und weiteren einteiligen Steckergehäusen, die keine Beweglichkeit aufweisen. Dies hängt u.a. von der Anzahl der im Steckergehäuse verlaufenden Leitungen, der Größe der Maschine und der Steckkontakte ab.

Diese dynamoelektrische Maschine 15 befindet sich in einem Motorgehäuse 18, das einen Stator 16 aufweist, in dem ein Wicklungssystem 17 angeordnet ist. Die Stromversorgung dieses Wicklungssystems 17 erfolgt beispielsweise, wie prinzipiell dargestellt wird, über Anschlussleitungen 6, die von der Zuleitung 10 über den Stecker 11, die Steckelemente 5 des Steckverbinders 4 zum Wicklungssystem 17 führen. Ein Rotor 26 treibt aufgrund elektromagnetischer Wechselwirkung mit dem Stator 16 eine Welle 20 an. Auf dieser Welle 20 befinden sich beispielsweise ein Geber 21, und/oder eine Bremse 23 deren Bremswirkung sich dadurch einstellt, dass eine Scheibe axial gegen die andere verschiebbar ist, und/oder ein Lüfter 24. Der Lüfter 24 verursacht im Betrieb über Durchbrüche 25 am Motorgehäuse 18 eine erzwungene Luftbewegung, die der Kühlung dient.

Das Steckergehäuse 1, insbesondere das Steckergehäuseteil 3, das direkt am Motorgehäuse 18 anliegt, wird mit dem Motorgehäuse 18 kontaktiert. Durch diese elektrische Verbindung, die prinzipiell durch Schrauben 8 hergestellt ist, wird eine elektrische Verbindung vom Motorgehäuse 18 über die Schrauben 8 und/oder den Flansch 14 zum Steckergehäuseteil 3 mit seiner Erdungskontaktstelle 4 und von dort über die Erdungsleitung 7 und oder dem Drehgelenk zum Steckelement 5 geführt, das als Erdungspin aufgeführt ist und über den Stecker 11 und die Zuleitung 10 zur Erde geführt. Das Steckergehäuseteil 3, das den Steckverbinder aufweist, ist über den Erdungspin ebenfalls geerdet.

Ein intaktes Drehgelenk 2 schafft über seine Komponenten, also die sich berührenden Halbschalen ebenfalls eine Erdung. Bei einem Bruch des Drehgelenks 2 ist aber durch die Erdungsleitung 7 nunmehr in jedem Fall der Personenschutz gewährleistet.

Die elektrische Kontaktierung des auf dem Motorgehäuse 18 befindlichen Steckergehäuseteils 3 kann ebenso durch Schweißung, Nieten und den anderen im Stand der Technik bekannten Verbindungstechniken erfolgen. Der Bereich auf dem Motorgehäuse 18, der nunmehr zusammen mit dem Flansch 14 und/oder den Schrauben 8 eine Erdungsverbindung zum Steckergehäuseteil 3 und damit zur Erdungskontaktstelle 13 schaffen soll, müssen fett- und schmutzfrei sein, damit keine zu hohen Übergangswiderstände vorliegen.

Ebenso soll das Motorgehäuse 18 vorteilhafterweise während der Kontaktierung von Steckergehäuseteil 3 mit Motorgehäuse 18 noch nicht lackiert sein und keine Oxydschichten aufweisen. Zur Vermeidung von nachträglich entstehenden Oxydschichten an dieser Kontaktstelle ist es vorteilhaft, eine geschweißte Masseverbindung zwischen dem Flansch 14 und dem Motorgehäuse 18 zu schaffen.

Vorteilhafterweise kann nunmehr das komplette Steckergehäuse 1 mit seinen Steckverbindern 4 und Steckelementen 5 als auch mit den Erdungsleitungen 7 vormontiert werden. Es müssen lediglich die Anschlussleitungen 6 für das Wicklungssystem 17 durch das Steckergehäuse 1 mit seinen Steckergehäuseteilen 3 und das Drehgelenk 2 geführt werden, um es mit den Steckelementen 5 des Steckverbinders 4 elektrisch zu verbinden.

Durch eine wendelförmige Erdungsleitung 7, wie in FIG 1 prinzipiell dargestellt, wird auch bei einem Bruch des Drehgelenks 2 und/oder Abreißen der Anschlussleitungen 6 auf jeden Fall die Erdungsverbindung aufrechterhalten und somit der Personenschutz gewährleistet. Die Erdungsverbindung würde somit erfindungsgemäß zuletzt den Kontakt zwischen metallischer Oberfläche der dynamoelektrischen Maschine und der elektrischen Erde verlieren.

In einem Fehlerfall, d.h. die metallische Oberfläche der dynamoelektrischen Maschine würde unter elektrischer Spannung stehen aufgrund eines Erdschlusses des Wicklungssystems, wäre über die Kontaktierung beispielsweise über Schrauben 8 oder Schweißverbindungen der Flansch 14 und das damit mechanisch und elektrisch verbundene untere metallische Steckergehäuseteil 3 ebenfalls unter elektrischer Spannung. Diese Spannung wird nun erfindungsgemäß über den Erdungspin 13, die Erdungsleitung 7 an ein Steckelement 5 weitergeleitet, das über einen Stecker 11 mit der Anlagenerde verbunden ist.

Auch bei einem Bruch des die beiden Teile des Steckergehäuses 1 verbindenden Drehgelenks 2, das normalerweise ebenfalls zur Erdung anzuziehen ist, wenn beide Steckergehäuseteile 3 metallisch sind, ist auf jeden Fall die Erdung gewährleistet und somit der Personenschutz gegeben.

Durch dieses erfindungsgemäße Erdungskonzept kann nunmehr der gesamte Stecker mit seinen Steckergehäuseteilen 3, dem Steckverbinder 4 und der oder den intern verlaufenden Erdungsleitungen 7 vorgefertigt werden. Die Anschlussleitungen 6, ggf. weitere Geber- oder Sensorleitungen oder Leitungen zur Funktionserdung sind nunmehr bei der Montage lediglich durch die Hohlräume des Steckergehäuses 1 zu führen und am Steckverbinder 4 zu kontaktieren.

Die Erdung, insbesondere zum Personenschutz wird somit allein durch die Kontaktierung des Flansches 14 mit der metallischen Oberfläche der dynamoelektrischen Maschine geschaffen. Aufwändige Montage einer eigenen Erdungsleitung aus dem Inneren der Maschine, beispielsweise von einem Lagerschild zu einem Steckelement 5 für die Anlagenerde wird vermieden. Dies ist insbesondere bei Maschinen kleiner Achshöhe äußerst vorteilhaft.

## Patentansprüche

1. Dynamoelektrische Maschine (15) mit einem Stator (16) in dem ein Wicklungssystem (17) positioniert ist, mit zumindest einem mehrteiligen Steckergehäuse (1) mit einem Drehgelenk (2) zwischen Steckergehäuseteilen (3), mit zumindest einem Steckverbinder (4) mit wenigstens zwei Steckelementen (5), wobei zumindest ein Steckergehäuseteil (3) aus elektrisch leitfähigem Material ist, wobei dieses elektrisch leitfähige Steckergehäuseteil (3) mit zumindest einem Steckelement (5) durch eine flexible elektrische Leitung durch das Drehgelenk verbunden ist, wobei das der dynamoelektrischen Maschine (15) zugewandte elektrisch leitfähige Steckergehäuseteil (3) mit der elektrisch leitenden Oberfläche eines Motorgehäuses (18) der dynamoelektrischen Maschine (15) elektrisch leitend verbunden ist.

2. Dynamoelektrische Maschine (15) nach Anspruch 1, **dadurch gekennzeichnet, dass** die elektrische Leitung innerhalb des Steckergehäuses (1) angeordnet ist.

3. Dynamoelektrische Maschine (15) nach Anspruch 1 oder 2, **dadurch gekennzeichnet, dass** die elektrische Leitung als Erdungsleitung (7) wendelartig ausgeführt ist.

4. Dynamoelektrische Maschine (15) nach Anspruch 4, **dadurch gekennzeichnet, dass** die elektrisch leitende Verbindung mit der Oberfläche der dynamoelektrischen Maschine (15), insbesondere mit dem Motorgehäuse (18) durch Schraubverbindung oder Lötverbindungen hergestellt ist.

## Claims

1. Dynamoelectric machine (15) having a stator (16) in which a winding system (17) is positioned, having at least one multipart plug housing (1) with a pivot joint (2) between parts (3) of the plug housing, having at least one plug-type connector (4) with at least two plugging elements (5), wherein at least one part (3) of the plug housing is made of electrically conductive material, wherein this electrically conductive part (3) of the plug housing is connected to at least one plugging element (5) by means of a flexible electric line through the pivot joint, wherein the electrically conductive part (3) of the plug housing which faces the dynamoelectric machine (15) is connected in an electrically conductive fashion to the electrically conductive surface of a motor housing (18) of the dynamoelectric machine (15).

2. Dynamoelectric machine (15) according to Claim 1, **characterized in that** the electric line is arranged inside the plug housing (1).

3. Dynamoelectric machine (15) according to Claim 1 or 2, **characterized in that** the electric line is embodied as a grounding line (7) in the manner of a coil.

4. Dynamoelectric machine (15) according to Claim 4, **characterized in that** the electrically conductive connection to the surface of the dynamoelectric machine (15), in particular to the motor housing (18) is produced by screw connection or soldered connections.

## Revendications

1. Machine ( 15 ) dynamoélectrique comprenant un stator ( 16 ) dans lequel est mis en position un système ( 17 ) d'enroulement, comprenant au moins un boîtier ( 1 ) de connexion en plusieurs parties ayant une articulation ( 2 ) à charnière entre des parties ( 3 ) du boîtier de connexion, comprenant au moins un connecteur ( 4 ) à enfichage ayant au moins deux éléments ( 5 ) d'enfichage, dans laquelle au moins une partie ( 3 ) de boîtier de connexion est en un matériau contacteur de l'électricité, cette partie ( 3 ) du boîtier de connexion conductrice de l'électricité étant reliée par l'articulation à charnière à au moins un élément ( 5 ) d'enfichage par une ligne électrique souple, dans laquelle la partie ( 3 ) du boîtier de connexion conductrice de l'électricité, qui est tournée vers la machine ( 15 ) dynamoélectrique, est reliée d'une manière conductrice de l'électricité à la surface conductrice de l'électricité d'un carter ( 18 ) de moteur de la machine ( 15 ) dynamoélectrique.

2. Machine ( 15 ) dynamoélectrique suivant la revendication 1,
**caractérisée en ce que** la ligne électrique est disposée à l'intérieur du boîtier ( 1 ) de connexion.

3. Machine ( 15 ) dynamoélectrique suivant la revendication 1 ou 2, **caractérisée en ce que** la ligne électrique est réalisée en hélice en tant que ligne ( 7 ) de terre.

4. Machine ( 15 ) dynamoélectrique suivant la revendication 3, **caractérisée en ce que** la liaison conductrice de l'électricité avec la surface de la machine ( 15 ) dynamoélectrique, notamment avec le carter ( 18 ) du moteur, est produite par vissage ou par des brasures.
